## Europäisches Patentamt
## European Patent Office
## Office européen des brevets

(19)

(11) Publication number: **0 142 246**
A1

(12)

# EUROPEAN PATENT APPLICATION

(21) Application number: **84306316.5**

(22) Date of filing: **14.09.84**

(51) Int. Cl.⁴: **F 02 K 9/28**

(30) Priority: **16.09.83 GB 8324899**

(43) Date of publication of application:
**22.05.85 Bulletin 85/21**

(84) Designated Contracting States:
**IT**

(71) Applicant: **The Secretary of State for Defence in Her Britannic Majesty's Government of The United Kingdom of Great Britain and Northern Ireland Whitehall London SW1A 2HB(GB)**

(72) Inventor: **Penny, Peter David
31 Ellesmere Crescent
Brackley Northamptonshire NN13 6BP(GB)**

(74) Representative: **McCormack, Derek James et al,
c/o Patents and Licensing Department Royal Ordnance
plc Griffin House PO Box 288 The Strand
London WC2N 5BB(GB)**

(54) **Rocket motor with two different charges.**

(57) A two-stage solid propellant rocket motor having a sustain phase propellant charge (8) and a boost phase propellant charge (7) arranged in serial alignment, with the boost charge situated to the rear of the sustain charge next to the principal exhaust nozzle (4) of the motor, whereby the two charges are separated by an intermediate nozzle (3). The intermediate nozzle (3) is designed to prevent a sudden depressurisation within the motor in the region of the sustain charge (8) when the boost charge (7) is fully consumed, and thus helps to prevent the sustain phase charge (8) from extinguishing.

EP 0 142 246 A1

./...

1 Agent' Ref : JX/6511

## IMPROVEMENTS IN OR RELATING TO ROCKET MOTORS

The present invention relates to rocket motors, in particular to boost-sustain rocket motors employing solid propellant.

The thrust produced by a sonic, choked exhaust nozzle of a rocket motor is proportional to the product of the pressure within the motor's combustion chamber upstream of the nozzle, and the nozzle's minimum cross-sectional area (the throat area). The mass flow rate through a choked nozzle is also proportional to the upstream pressure and throat area. The thrust of a choked nozzle is therefore proportional to the mass flow rate through the nozzle.

For rocket motors that require a high, short duration boost thrust followed by a lower, longer duration sustain thrust, the most common technique used is to alter the mass flow rate of combustion gases through a constant area choked nozzle. This is normally achieved by providing two propellant charges arranged in series within the combustion chamber, the first consisting of a boost propellant charge for providing the high boost thrust, and the second consisting of a sustain propellant charge which continues to burn after the first charge is consumed. However, any alteration in the mass flow rate of the combustion gases through a sonic choked nozzle is accompanied by a corresponding alteration in upstream pressure. If the change from boost mass flow rate to sustain mass flow rate is too rapid, the correspondingly rapid rate of depressurisation within the combustion chamber may extinguish the remaining, combusting propellant.

The invention provides a means whereby a rapid transition between boost and sustain operation may be obtained without extinguishing the remaining, combusting propellant.

Accordingly, the present invention provides a rocket motor comprising a combustion chamber having a principal exhaust nozzle, a first solid charge of sustain rocket propellant disposed within said chamber and, disposed within said chamber between said first charge and said nozzle, a second solid charge of boost rocket propellant, wherein between said first and second charges is disposed an intermediate exhaust nozzle which is adapted, in use, to direct

combustion gases from said first charge towards said principal nozzle.

The combustion chamber of the present rocket motor is therefore divided into a sustain chamber containing the first charge and a boost chamber containing the second charge, the two chambers being separated by the intermediate nozzle.

On ignition of the motor, both charges begin to burn. The throat area of, and the net mass flow rate of combustion gases through, the principal nozzle are chosen so to ensure, during the boost phase, sonic flow of combustion gases through the principal nozzle but only subsonic flow of combustion gases through the intermediate nozzle. During the boost phase the sustain chamber pressure is therefore only slightly higher than that in the boost chamber. The throat area of the intermediate nozzle is chosen so that the pressure produced in the sustain chamber by the mass flow of combustion gases from the sustain charge is high enough, after the completion of the boost phase, to ensure sonic, choked flow in the intermediate nozzle.

When the boost charge burns out the pressure in the boost chamber rapidly drops to a valve determined by the mass flow rate of gases from the sustain chamber and the principal nozzle throat area. At the same time the pressure in the sustain chamber drops but only to the point where the flow through the intermediate nozzle become sonic. The intermediate nozzle not only ensures that the drop in pressure in the sustain chamber is less severe than in the boost chamber, but also ensures that the rate of depressurisation in the sustain chamber is less rapid. This in turn makes it far less likely that the sustain charge will extinguish when the boost charge burns out. The pressure in the sustain chamber becomes controlled by the intermediate nozzle throat area and the mass flow rate of gases from the sustain chamber, and is independent of the throat area of the principal nozzle.

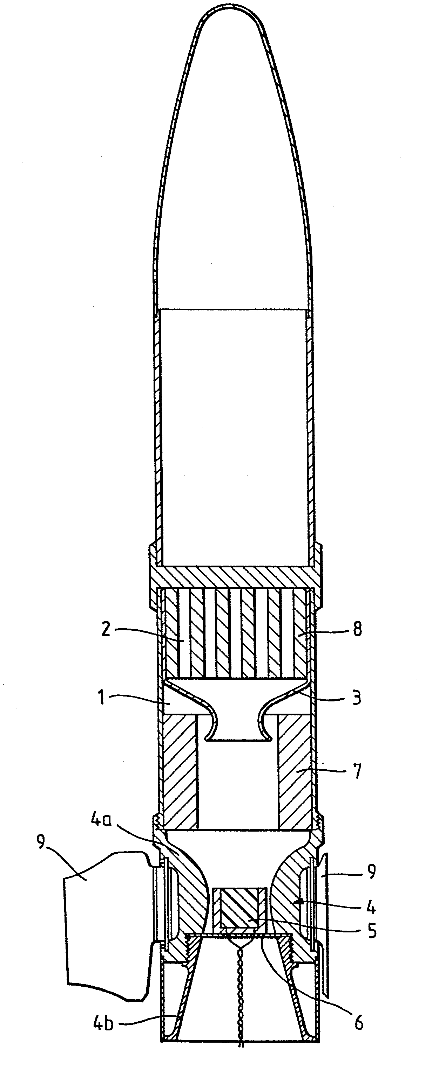

A rocket having a motor in accordance with the present invention will now be described by way of example with reference to the accompanying drawing, which shows a longitudinal section of the rocket.

As shown in the drawing the rocket has a motor comprising a boost combustion chamber 1, a sustain combustion chamber 2, an intermediate nozzle 3 between the two chambers, and a principal nozzle assembly 4 inclduing an igniter assembly 5 and a burster disc 6. A boost charge of solid propellant 7 fits into the chamber 1 downstream of the intermediate nozzle 3, whilst a sustain charge of solid propellant 8 fits into the chamber 2 upstream of the intermediate nozzle 3. The rocket has four pliable fins 9, so that the rocket can fit into a launcher tube with the fins folded down. They are canted to cause the rocket to roll in flight.

In a typical example of the invention the boost phase 7 comprises a fast burning rate cordite propellant extruded as a tube whose hollow centre has an inverted star cross section, whilst the sustain phase 8 comprises a slow burning rate cordite propellant in cylinder form which has a plurality of axial perforations passing through it.

The nozzle assembly 4 comprises a convergent and throat section 4a and an exit cone 4b. These screw together to lock the burster disc 6 into place. The burster disc 6 carries the igniter assembly 5. The igniter assembly 5 comprises an ABS plastics moulding cannister containing a pyrotechnic powder and an initiative fuze, the leads for which pass through the burster disc.

Firing the igniter assembly initiates burning of both propellant stages. The boost stage combustion chamber 1 operates at a pressure of the order of 27 MPa, and thus ensure sonic choked flow in the principal nozzle 4 and sub-sonic unchoked flow in the intermediate nozzle 3. On completion of the boost phase the pressure in the chamber 1 drops and permits sonic flow of sustain phase gases in the throat of the intermediate nozzle 3. The operating pressure in the boost phase combustion chamber 1 during the sustain phase is of the order of 1.4 MPa.

Claims

1.  A rocket motor comprising a combustion chamber having a principal exhaust nozzle, a first solid charge of sustain rocket propellant disposed within said chamber and a second solid charge of boost rocket propellant disposed within said chamber between said first charge and said principal nozzle, characterised in that between said first and second charges is disposed an intermediate exhaust nozzle (3) which is adapted, in use, to direct combustion gases from said first charge (8) towards said principal nozzle (4).

1/1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 120 391 (MINISTER OF TECHNOLOGY) * page 1, line 74 - page 2, line 14; page 2, line 32 - page 3, line 28, figure 1 * | 1 | F 02 K 9/28 |
| | --- | | |
| X | FR-A-2 336 560 (IMPERIAL METAL) * figure 3 * | 1 | |
| | --- | | |
| X | FR-A-2 448 636 (LUCHAIRE) * whole document * | 1 | |
| | --- | | |
| X | DE-B-1 526 831 (KLEIN) * whole document * | 1 | |
| | --- | | |
| A | FR-A-1 265 327 (ETAT FRANCAIS) * whole document * | 1 | TECHNICAL FIELDS SEARCHED (Int. Cl.4) |
| | --- | | F 02 K |
| A | US-A-3 656 304 (McCULLOUGH) | | |
| | --- | | |
| A | US-A-3 665 706 (PRICE) | | |
| | ----- | | |

The present search report has been drawn up for all claims

| Place of search | Date of completion of the search | Examiner |
|---|---|---|
| THE HAGUE | 11-12-1984 | IVERUS D. |